# EUROPÄISCHE PATENTSCHRIFT

(11) **EP 4 281 490 B1**
(45) Veröffentlichungstag und Bekanntmachung des Hinweises auf die Patenterteilung: **01.01.2025**
(21) Anmeldenummer: 22701199.6
(22) Anmeldetag: 14.01.2022
(51) Int. Cl.: C08G 18/08, C08G 18/10, C08G 18/12, C08G 18/32, C08G 18/42, C08G 18/66, C08G 18/72, C08G 18/73, C08G 18/75, C09J 175/06

(54) **LAGERSTABILE 1K-SPRÜHKLEBSTOFFE AUF BASIS VON POLYURETHANDISPERSIONEN**
STORAGE-STABLE 1K SPRAY ADHESIVES BASED ON POLYURETHANE DISPERSIONS
ADHÉSIFS À PULVÉRISER 1K STABLE AU STOCKAGE À BASE DE DISPERSIONS DE POLYURÉTHANE

(30) Priorität: 19.01.2021 EP 21152261; 01.06.2021 EP 21177062
(43) Veröffentlichungstag der Anmeldung: 29.11.2023
(73) Patentinhaber: Covestro Deutschland AG, 51373 Leverkusen (DE)
(72) Erfinder: THIEBES, Christoph, 51061 Köln (DE); DOERR, Sebastian, 40593 Düsseldorf (DE); WEIKARD, Jan, 51375 Leverkusen (DE); KUEKER, Peter, 51377 Leverkusen (DE); KRAUS, Harald, 51371 Leverkusen (DE); ARNDT, Wolfgang, 41542 Dormagen (DE); LIBERATI, Robert, 50354 Hürth-Efferen (DE)
(74) Vertreter: Levpat
(86) Internationale Anmeldenummer: PCT/EP2022/050709
(87) Internationale Veröffentlichungsnummer: WO 2022/157075

(56) Entgegenhaltungen:
- WO-A1-2012/069412
- WO-A1-2020/064826
- WO-A1-2020/064829
- WO-A1-96/40812
- CN-A- 104 140 773
- DE-U1- 202016 006 525

## Beschreibung

Die vorliegende Erfindung betrifft eine wässrige Klebstoffformulierung, enthaltend eine Mischung aus mindestens einem teilkristallinen oder kristallinen Polyurethan mit einer Schmelztemperatur von 35 bis 80 °C und einer Schmelzenthalpie von ≥ 35 J/g als Komponente A, mindestens einem Weichmacher als Komponente B, mindestens einem Salz als Komponente C, und gegebenenfalls mindestens einem weiteren Polymer als Komponente D, ein Verfahren zur Herstellung der wässrigen Klebstoffformulierung durch Mischen der einzelnen Komponenten, ein Verfahren zur Herstellung einer Klebung von Substraten, dadurch gekennzeichnet, dass eine erfindungsgemäße Klebstoffformulierung auf mindestens ein Substrat appliziert wird und anschließend ein Kleben erfolgt, ein Verfahren zur Herstellung eines Verbundmaterials durch Kleben der einzelnen Fügeteile des Verbundmaterials, wobei die wässrige Klebstoffformulierung eingesetzt wird und die Verwendung der wässrigen Klebstoffformulierung zum Kleben von Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen, jeweils miteinander und/oder an porige Substrate, bevorzugt mit einer Dichte von weniger als 1 kg/Liter, insbesondere zum Kleben von Schaumstoffen in der Matratzen-, Möbel- und/oder Polsterverklebung.

Insbesondere beim Kleben von Schaumstoffen bei der Matratzen- und Möbelherstellung sind die folgenden beiden Verfahren gebräuchlich:
Beim 2K(omponenten)-Verfahren werden mit einer Spritzpistole, die zwei Düsen besitzt, gleichzeitig Klebstoffformulierung und wässriges Koagulationsmittel separat verdüst. Im Sprühstrahl treffen beide Mischungen aufeinander und koagulieren dort und/oder auf der Substratoberfläche. Dieses Verfahren ist jedoch störanfällig und schwer zu handhaben, da beide Komponenten konstant in einem bestimmten Mischungsverhalten verdüst werden müssen.

Beim 1K(omponenten)-Verfahren wird eine wässrige Klebstoffformulierung durch eine Spritzpistole mit einer Düse versprüht, so dass auf dem zu verklebenden Substrat eine Klebstoffschicht aufgetragen wird, die bei der Kontaktierung zweier damit beschichteter Flächen unter moderatem Druck sofort oder zumindest kurz nach dem Auftragen eine ausreichende Haftung und Kohäsionsfestigkeit aufbaut, so dass zumindest die beim Kleben von Schaumsubstraten auftretenden Rückstellkräfte aufgefangen werden und sich die kontaktierten Flächen nicht voneinander lösen. Dabei soll die Formulierung lagerstabil sein und innerhalb einer Lagerzeit keine signifikante Koagulation zeigen, die ggf. zu einer Verstopfung der Düse führen würde.

Wichtige Anwendungsgebiete für diese Sprühkoagulationsverfahren sind die Herstellung von Matratzen und Sitzmöbeln. Im Markt besteht die Forderung nach Alternativen für die gebräuchlichen Polychloropren-Dispersionsklebstoffe, um beispielsweise die zukünftigen Anforderungen von Eco-Labels, die den Einsatz von Organochlorverbindungen beschränken, erfüllen zu können.

Versprühbare Klebstoffformulierungen auf Basis von Polyurethan-Dispersionen sind dem Fachmann an sich bekannt und werden in verschiedenen Bereichen eingesetzt, unter anderem auch zur Schaumverklebung im Matratzen- und Möbelsektor nach dem 2K-Verfahren.

Die Dokumente WO 2020/064829 A1 und WO 2020/064826 A1 beschreiben die Verwendung von Klebstoffformulierungen auf Basis von Polyurethandispersionen und Weichmachern für das 2K-Sprühkoagulationsverfahren. Lagerstabile wässrige Klebstoffformulierungen, die für das 1K-Sprühkoagulationsverfahren eingesetzt werden können, werden nicht erwähnt.

Klebstoffe auf Basis von wässrigen Polyurethan-Dispersionen haben sich weltweit in weiteren anspruchsvollen industriellen Anwendungen etabliert, zum Beispiel bei der Schuhfertigung, dem Kleben von Teilen für die KFZ-Innenausstattung, der Folienlaminierung oder dem Kleben von textilen Substraten.

Bei der Verwendung solcher Klebstoffe auf Basis von wässrigen Polyurethan-Dispersionen zum Kleben von Substraten wird häufig nach dem Thermoaktivierverfahren gearbeitet. Hierbei wird die Dispersion auf das Substrat aufgebracht, und nach vollständiger Verdunstung des Wassers wird die Klebstoffschicht durch Erwärmen, beispielsweise mit einem Infrarotstrahler, aktiviert und in einen klebfähigen Zustand überführt. Die Temperatur, bei der der Klebstofffilm klebrig wird, wird als Aktiviertemperatur bezeichnet.

Bei der Verwendung von Polyurethan-Dispersionen kann aber auch nach dem Verfahren des Nassklebens gearbeitet werden, d.h. die Herstellung der Klebung durch Zusammenfügen der aufgetragenen Klebstoffschichten erfolgt unmittelbar nach dem Klebstoffauftrag, spätestens aber vor Abschluss der Filmbildung, wobei die Klebstoffschichten noch wesentliche Mengen an Wasser enthalten. Bis zum Abbinden des Klebstoffes ist dabei in der Regel eine mechanische Fixierung der zu verbindenden Teile erforderlich. Dieses Verfahren wird häufig zur Klebung von Holz oder textilen Substraten verwendet.

Sowohl das Thermoaktivierverfahren als auch das Verfahren der Nassverklebung sind aber für das Kleben von Schaumsubstraten wenig geeignet. Insbesondere die langsame Verdampfung des Wassers erfordert lange Wartezeiten zwischen Klebstoffauftrag und Herstellung der Klebungen oder entsprechende Trockenanlagen. Zudem kann ein nicht unerheblicher Teil des Klebstoffs vor oder während der Trocknung in die Poren der Schaumsubstrate eindiffundieren und steht dann nicht mehr für die eigentliche Klebung zur Verfügung.

Aufgabe der vorliegenden Erfindung ist es daher, eine entsprechende Klebstoffformulierung bereitzustellen, die die beschriebenen Nachteile nicht aufweist. Insbesondere soll eine entsprechende Formulierung bereitgestellt werden, die auch ohne die apparativ aufwendige und fehleranfällige Verwendung von 2K-Verfahren unmittelbar nach dem Auftrag auf das Substrat, insbesondere durch Versprühen, eine hohe Anfangsfestigkeit zeigen, lange lagerfähig sind ohne zu koagulieren und im Wesentlichen frei von halogenorganischen Polymeren sind. Die erfindungsgemäß bereitzustellende Formulierung soll aber dennoch dafür geeignet sein, in einem 2K-Verfahren verwendet zu werden.

Überraschend wurde erfindungsgemäß gefunden, dass wässrige Formulierungen, mindestens enthaltend mindestens ein spezielles Polyurethan, mindestens einen Weichmacher und mindestens ein Salz lagerstabil sind, sich für das Kleben von Substraten nach dem 1K-Verfahren oder auch nach dem 2K-Verfahren eignen, und gleichzeitig die oben beschriebenen Nachteile des Standes der Technik nicht aufweisen.

Die Lösung der erfindungsgemäßen Aufgaben gelingt durch eine wässrige Klebstoffformulierung, enthaltend eine Mischung aus
(A) mindestens einem teilkristallinen oder kristallinen Polyurethan mit einer Schmelztemperatur von 35 bis 80 °C und einer Schmelzenthalpie von ≥ 35 J/g als Komponente A,
(B) mindestens einem Weichmacher als Komponente B,
(C) mindestens einem Salz als Komponente C, und
(D) gegebenenfalls mindestens einem weiteren Polymer als Komponente D,

wobei die Mischung dadurch gekennzeichnet ist, dass sie
   (A) 30 bis 94,9 Gew.-% der Komponente A,
   (B) 5 bis 45 Gew.-% der Komponente B,
   (C) 0,001 bis 3 Gew.-% der Komponente C und
   (D) gegebenenfalls 0 bis 30 Gew.-% der Komponente D enthält,
jeweils bezogen auf die Summe der Mengen der in der in der Mischung vorliegenden Komponenten, A, B, C und ggf. D.

Die einzelnen Komponenten der in der erfindungsgemäßen wässrigen Klebstoffformulierung enthaltenen Komponenten werden im Folgenden detailliert beschrieben.

### Komponente A:

Die erfindungsgemäße Mischung enthält als Komponente A mindestens ein teilkristallines oder kristallines Polyurethan mit einer Schmelztemperatur von 35 bis 80 °C und einer Schmelzenthalpie von ≥ 35 J/g als Komponente A.

Das als Komponente A vorliegende mindestens eine Polyurethan ist im Allgemeinen ein oder mehrere Polyurethane im engeren Sinn, d.h. solche Polymere, die durch Polymerisation von Polyolen und Polyisocyanaten erhalten werden, aber es können auch solche sein, bei denen als AufbauKomponenten auch Mono- und/oder Diamine eingesetzt werden, gegebenenfalls als Kettenverlängerer. Im Rahmen der vorliegenden Erfindung liegt somit als Komponente A im Allgemeinen mindestens ein Polyurethan, mindestens ein Polyharnstoff und/oder mindestens ein Polyurethan-harnstoff vor.

Als teilkristallin oder kristallin wird das erfindungsgemäße mindestens eine Polyurethan bezeichnet, wenn es in der DSC-Messung nach DIN 65467:1999-03 bei einer Aufheizrate von 20 K/min einen Schmelzpeak aufweist. Der Schmelzpeak wird durch das Aufschmelzen regelmäßiger Teilstrukturen im Polyurethan verursacht. Die Schmelztemperatur des in der erfindungsgemäßen Formulierung enthaltenen mindestens einen Polyurethans liegt bei 35 bis 80 °C, bevorzugt 40 bis 70 °C, besonders bevorzugt 42 bis 55 °C.

Die Schmelzenthalpie des erfindungsgemäß eingesetzten mindestens einen Polyurethans beträgt ≥ 35 J/g, bevorzugt ≥ 45 J/g, besonders bevorzugt ≥ 50 J/g.

Im Allgemeinen kann in der erfindungsgemäßen Klebstoffformulierung jedes dem Fachmann bekannte Polyurethan eingesetzt werden. In einer bevorzugten Ausführungsform der vorliegenden Erfindung ist das als Komponente A eingesetzt mindestens eine Polyurethan aufgebaut aus
(Ai) mindestens einem kristallinen oder teilkristallinen difunktionellen Polyesterpolyol mit einem zahlenmittleren Molekulargewicht von wenigstens 400 g/mol und einer Schmelztemperatur von wenigstens 35 °C und einer Schmelzwärme von wenigstens 35 J/g,
(Aii) optional mindestens einer difunktionellen Polyolkomponente mit einem zahlenmittleren Molekulargewicht von 62 bis 399 g/mol,
(Aiii) mindestens eine Isocyanatkomponente,
(Aiv) mindestens einer gegenüber Isocyanat reaktiven Komponente, die mindestens eine ionische oder potentiell ionische Gruppe trägt, und
(Av) optional weiteren gegenüber Isocyanat reaktiven Komponenten.

Das mindestens eine Polyurethan enthält beispielsweise 50 bis 95 Gew.-% des Bestandteils A(i), 0 bis 10 Gew.-% des Bestandteils A(ii), 4 bis 25 Gew.-% des Bestandteils A(iii), 0,5 bis 10 Gew.-% des Bestandteils A(iv) und 0 bis 30 Gew.-% des Bestandteils A(v), wobei die Summe der Bestandteile 100 Gew.-% ergibt.

In einer bevorzugten Form der Erfindung enthält das mindestens eine Polyurethan 65 bis 92 Gew.-% des Bestandteils A(i), 0 bis 5 Gew.-% des Bestandteils A(ii), 6 bis 15 Gew.-% des Bestandteils A(iii), 0,5 bis 5 Gew.-% des Bestandteils A(iv) und 0 bis 25 Gew.-% des Bestandteils A(v), wobei die Summe der Bestandteile 100 Gew.-% ergibt.

In einer besonders bevorzugten Form der Erfindung enthält das mindestens eine Polyurethan 75 bis 92 Gew.-% des Bestandteils A(i)), 0 bis 5 Gew.-% des Bestandteils A(ii), 8 bis 15 Gew.-% des Bestandteils A(iii), 0,5 bis 4 Gew.-% des Bestandteils A(iv) und 0 bis 15 Gew.-% des Bestandteils A(v), wobei die Summe der Bestandteile 100 Gew.-% ergibt.

In einer ganz besonders bevorzugten Form der Erfindung enthält das mindestens eine Polyurethan 80 bis 90 Gew.-% des Bestandteils A(i), 0 bis 3 Gew.-% des Bestandteils A(ii), 8 bis 14 Gew.-% des Bestandteils A(iii), 0,5 bis 3 Gew.-% des Bestandteils A(iv) und 0 bis 10 Gew.-% des Bestandteils A(v), wobei die Summe der Bestandteile 100 Gew.-% ergibt.

Als kristalline oder teilkristalline difunktionelle Polyesterpolyole A(i) kommen insbesondere lineare oder auch schwach verzweigte Polyesterpolyole in Betracht, die auf Dicarbonsäuren und/oder deren Derivaten, wie Anhydride, Ester oder Säurechloride und bevorzugt aliphatischen, linearen Polyolen basieren. Auch Mischungen von Dicarbonsäuren und/oder deren Derivate sind geeignet. Geeignete Dicarbonsäuren sind beispielsweise Adipinsäure, Bernsteinsäure, Sebacinsäure oder Dodecandisäure. Bevorzugt sind Bernsteinsäure, Adipinsäure und Sebacinsäure und deren Mischungen, besonders bevorzugt sind Bernsteinsäure und Adipinsäure und deren Mischungen, ganz besonders bevorzugt ist Adipinsäure. Diese werden in Mengen von mindestens 90 mol-%, bevorzugt von 95 bis 100 mol-%, bezogen auf die Gesamtmenge aller Carbonsäuren, eingesetzt.

Die difunktionellen Polyesterpolyole A(i) können beispielsweise durch Polykondensation von Dicarbonsäuren mit Polyolen hergestellt werden. Die Polyole haben bevorzugt ein Molgewicht von 62 bis 399 g/mol, bestehen aus 2 bis 12 C-Atomen, sind vorzugsweise unverzweigt, difunktionell und weisen bevorzugt primäre OH-Gruppen auf.

Beispiele für Polyole, die für die Herstellung der Polyesterpolyole A(i) verwendet werden können, sind mehrwertige Alkohole, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische.

Bevorzugte Polyolkomponenten für die Polyesterpolyole A(i) sind Ethandiol-1,2, Butandiol-1,4 und Hexandiol-1,6, besonders bevorzugt sind Butandiol-1,4 und Hexandiol-1,6, ganz besonders bevorzugt ist Butandiol-1,4.

Die Polyesterpolyole A(i) können aus einem oder mehreren Polyolen aufgebaut sein. In einer bevorzugten Ausführungsform der vorliegenden Erfindung sind sie nur aus einem Polyol aufgebaut. Wenn die kristallinen oder teilkristallinen difunktionellen Polyesterpolyole mit einem zahlenmittleren Molekulargewicht von wenigstens 400 g/mol und einer Schmelztemperatur von wenigstens 35 °C eine Schmelzwärme von wenigstens 50 J/g aufweisen, so hat das unter Verwendung desselben hergestellte Polymer regelmäßig eine Schmelzwärme von ≥ 35 J/g. Falls gewünscht kann eine Adjustierung der Schmelzwärme des Polymers durch eine leichte Veränderung des Gehaltes an Polyesterpolyol A(i) in der Zusammensetzung oder durch eine geringe Variation der Schmelzwärme des Polyesterpolyols erreicht werden. Diese Maßnahmen erfordern lediglich orientierende Versuche und liegen völlig innerhalb der praktischen Erfahrung des Durchschnittsfachmanns auf diesem Gebiet.

Die Herstellung von Polyesterpolyolen A(i) ist aus dem Stand der Technik bekannt.

Das zahlenmittlere Molekulargewicht der Polyesterpolyole A(i) liegt vorzugsweise bei 400 bis 4000 g/mol, weiter bevorzugt 1000 bis 3000 g/mol, besonders bevorzugt 1500 bis 2500 g/mol, ganz besonders bevorzugt 1800 bis 2400 g/mol.

Die Schmelztemperatur der kristallinen bzw. teilkristallinen Polyesterpolyole liegt in der Regel mindestens bei 35 °C, bevorzugt 40 bis 80 °C, besonders bevorzugt 42 bis 60 °C und ganz besonders bevorzugt 45 bis 52 °C. Die Schmelzwärme beträgt ≥ 35 J/g, bevorzugt ≥ 40 J/g und besonders bevorzugt ≥ 50 J/g.

Als Aufbaukomponente A(ii) geeignete difunktionelle Polyolkomponenten mit einem Molekulargewicht von 62 bis 399 G/mol sind beispielsweise die zur Herstellung der Polyesterpolyole A(i) genannten Polyole. Auch niedermolekulare Polyesterdiole, Polyetherdiole, Polycarbonatdiole oder andere Polymerdiole sind prinzipiell geeignet, sofern sie ein Molekulargewicht von 62 bis 399 G/mol aufweisen.

Als Aufbaukomponenten A(iii) sind beliebige organische Verbindungen geeignet, die mindestens zwei freie Isocyanatgruppen pro Molekül aufweisen. Bevorzugt werden Diisocyanate Y(NCO)₂ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoff-Atomen, einen zweiwertigen aromatischen Kohlenwasserstoffrest mit 6 bis 15 Kohlenstoff-Atomen oder einen zweiwertigen araliphatischen Kohlenwasserstoffrest mit 7 bis 15 Kohlenstoffatomen steht. Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methyl-cyclohexan, 4,4'-Diisocyanato-dicyclohexyl-methan, 4,4'-Diisocyanato-dicyclohexyl-propan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat sowie aus diesen Verbindungen bestehende Gemische.

Es ist auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion- und/oder Oxadiazintrion-Struktur. Als Beispiel für ein nicht-modifiziertes Polyisocyanat mit mehr als 2 Isocyanatgruppen pro Molekül sei z.B. 4-Isocyanatomethyl-1,8-octandiisocyanat (Nonantriisocyanat) genannt.

Besonders bevorzugte Aufbaukomponenten A(iii) sind Hexamethylendiisocyanat (HDI) und 1-Iso-cyanato-3,3,5-trimethyl-5-isocyanatomethyl-cyclohexan (IPDI) sowie deren Gemische.

Bevorzugte gegenüber Isocyanat reaktive Komponenten A(iv), die mindestens eine ionische oder potentiell ionische Gruppe tragen, sind Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und deren Alkali- und Ammoniumsalze. Beispiele sind Dimethylolpropionsäure, Dimethylolbuttersäure, Hydroxypivalinsäure, N-(2-Aminoethyl)-β-alanin, N-(2-Aminoethyl)-2-aminoethansulfonsäure, N-(2-Aminoethyl)-2-aminoethancarbonsäure Ethylendiaminpropyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III). Für die Salzbildung gut geeignet sind Natrium-, Kalium-, Lithium- und Calcium-Hydroxid sowie tertiäre Amine wie Triethylamin, Dimethylcyclohexylamin und Ethyldiisopropylamin. Es können auch andere Amine zur Salzbildung eingesetzt werden, wie z.B. Ammoniak, Diethanolamin, Triethanolamin, Dimethylethanolamin, Methyldiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Weiter als Komponente A(iv) geeignet sind durch Zugabe von Säuren in kationische Gruppen überführbare Bausteine wie N-Methyl-diethanolamin.

Besonders bevorzugte Komponenten A(iv) sind solche, die über Carboxy- und/oder Carboxylat- und/oder Sulfonatgruppen verfügen.

Ganz besonders bevorzugt sind die Natriumsalze der N-(2-Aminoethyl)-2-aminoethansulfonsäure. und der N-(2-Aminoethyl)-2-aminoethancarbonsäure, insbesondere der N-(2-Aminoethyl)-2-aminoethansulfonsäure.

Gegenüber Isocyanaten reaktive Komponenten A(v) können beispielsweise Polyoxyalkylenether, die mindestens eine Hydroxy- oder Aminogruppe enthalten, sein. Die häufig verwendeten Polyalkylenoxidpolyetheralkohole sind in an sich bekannter Weise durch Alkoxylierung geeigneter Startermoleküle zugänglich. Für die Alkoxylierungsreaktion geeignete Alkylenoxide sind insbesondere Ethylenoxid und Propylenoxid, die einzeln oder auch zusammen bei der Alkoxylierungsreaktion eingesetzt werden können.

Weitere gegenüber Isocyanat reaktive Komponenten A(v) sind beispielsweise Monoamine, Diamine und/oder Polyamine sowie deren Gemische. Beispiele für Monoamine sind aliphatische und/oder alicyclische primäre und/oder sekundäre Monoamine wie Ethylamin, Diethylamin, die isomeren Propyl- und Butylamine, höhere linear-aliphatische Monoamine und cycloaliphatische Monoamine wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin oder 2-Propanolamin. Beispiele für Diamine sind 1,2-Ethandiamin, 1,6-Hexamethylendiamin, 1-Amino-3,3,5-trimethyl-5-aminomethyl-cyclohexan (Isophorondiamin), Piperazin, 1,4-Diamino-cyclohexan und Bis-(4-amino-cyclohexyl)-methan. Weiterhin kommen Adipinsaeuredihydrazid, Hydrazin bzw. Hydrazinhydrat in Frage. Weitere Beispiele sind Aminoalkohole, d. h. Verbindungen, die in einem Molekül Amino- und Hydroxylgruppen enthalten, wie z. B. 1,3-Diamino-2-propanol, N-(2-Hydroxyethyl)-ethylendiamin oder N,N-Bis(2-Hydroxyethyl)-ethylendiamin. Beispiele für Polyamine sind Diethylentriamin und Triethylentetramin.

In einer bevorzugten Form der Erfindung enthält das erfindungsgemäß eingesetzte mindestens eine Polyurethan zur Einstellung der Molmasse mindestens ein Monoamin und / oder mindestens ein Diamin als gegenüber Isocyanat reaktive Komponente A(v).

Das in der erfindungsgemäßen wässrigen Formulierung enthaltene mindestens eine Polyurethan kann im Allgemeinen nach jedem dem Fachmann bekannten Verfahren hergestellt werden. Bevorzugt werden sie nach dem Acetonverfahren hergestellt. Die Anwendung und Durchführung des Acetonverfahrens ist Stand der Technik und dem Fachmann bekannt.

In einer speziellen Ausführungsform der Erfindung enthält das mindestens eine Polyurethan einen Polyester aus Adipinsäure und Butandiol-1,4 als Komponente A(i), eine Mischung aus Hexamethylendiisocyanat (HDI) und 1-Isocyanato-3,3,5-trimethyl-5-isocyanatomethyl-cyclohexan (IPDI) als Komponente A(iii), das Natriumsalz der N-(2-Aminoethyl)-2-aminoethansulfonsäure als Komponente A(iv) und Diethanolamin als Komponente A(v).

In einer weiteren speziellen Ausführungsform der Erfindung enthält das mindestens eine Polyurethan einen Polyester aus Adipinsäure und Butandiol-1,4 als Komponente A(i), Butandiol-1,4 als Komponente A(ii), eine Mischung aus Hexamethylendiisocyanat (HDI) und 1-Iso¬cyanato-3,3,5-trimethyl-5-isocyanatomethyl-cyclohexan (IPDI) als Komponente A(iii), das Natriumsalz der N-(2-Aminoethyl)-2-aminoethansulfonsäure als Komponente A(iv) und Diethanolamin als Komponente A(v).

In einer weiteren speziellen Ausführungsform enthält das Polymer A und/oder D gleiche oder unterschiedliche reaktive Gruppen, welche beispielsweise in Folge der Verdunstung des Wassers aus der Formulierung bzw. der Koaleszenz von Polymerpartikeln miteinander reagieren können, so dass es nach Applikation des Klebstoffes zu einer Vernetzung der Polymere A und/oder D kommt. Dies sind beispielsweise Alkoxysilan- und/oder Silanol-Gruppen. Die Methoden, solche Gruppen in die Polymere A und/oder D einzubauen, sind dem Durchschnittsfachmann bekannt. Beispielsweise können bei der Herstellung der Komponente A und/oder D, wenn es sich bei Komponente D um ein Polyurethan handelt, prinzipiell in jeder der beschriebenen Komponenten ai-av Verbindungen eingesetzt werden, die Alkoxysilan- bzw. Silanolgruppen enthalten. Bevorzugt werden die Alkoxysilan- bzw. Silanolgruppen in das Polymer A und/oder ggf. D eingebaut, in dem als Komponente av anteilsmäßig Verbindungen mit Alkoxysilan- bzw. Silanolgruppen eingesetzt werden, z.B. Aminosilane wie beispielsweise Aminoproplyethoxysilan oder Aminopropylmethoxysilan.

Das mindestens eine Polyurethan (Komponente A) liegt in der in der erfindungsgemäßen wässrigen Klebstoffformulierung vorliegenden Mischung in einer Menge von 30 bis 94,9 Gew.-%, bevorzugt 52 bis 80 Gew.-%, besonders bevorzugt 55 bis 75% Gew.-%, jeweils bezogen auf die Summe der Mengen der in der in der Mischung vorliegenden Komponenten, A, B, C und ggf. D, vor.

Erfindungsgemäß wird als nichtflüchtiger Anteil der Massenrückstand verstanden, der nach Verdunsten durch das Verfahren gemäß DIN EN ISO 3251:2019 bestimmt wird (1 g/1 h /125 °C).

### Komponente B:

Die erfindungsgemäße Mischung enthält als Komponente B mindestens einen Weichmacher.

Als Weichmacher werden erfindungsgemäß bevorzugt schwerflüchtige niedermolekulare, polare Gruppen enthaltende Verbindungen eingesetzt.

Bevorzugte Weichmacher sind beispielsweise Di(phenoxyethyl)formal, schwerflüchtige Ester auf Basis von aromatischen Carbonsäuren, beispielsweise Phthalsäure, Isophthalsäure, Terepthalsäure, Benzoesäure oder Trimellithsäure, aliphatischen Carbonsäuren, beispielsweise Maleinsäure, Fumarsäure, Bernsteinsäure, Essigsäure, Propionsäure, Buttersäure, Adipinsäure, Azelainsäure, Sebazinsäure oder Zitronensäure, Cyclohexandicarbonsäuren, Fettsäuren, beispielsweise Ölsäure, Rizinolsäure oder Stearinsäure, Phosphorsäureester, Sulfonsäureester oder Alkylsulfonsäureester, epoxidierte Pflanzenöle, beispielsweise epoxidiertes Leinöl oder epoxidiertes Sojaöl.

Besonders bevorzugt werden erfindungsgemäß als Komponente B Di(phenoxyethyl)formal, Dibutylterephthalat, Alkylsulfonsäureester des Phenols, Ester von Monolen und Polyolen auf Basis Benzoesäure eingesetzt. Ganz besonders bevorzugt ist das mindestens eine Weichmacher ausgewählt aus der Gruppe bestehend aus Di(phenoxyethyl)formal, Dibutylterephthalat, Dipropylenglykoldibenzoat und Mischungen davon.

Weiter bevorzugt wird erfindungsgemäß Di(phenoxyethyl)formal oder Dipropylenglykoldibenzoat als, insbesondere Dipropylenglykoldibenzoat, als Weichmacher eingesetzt.

Bevorzugt werden erfindungsgemäß Weichmacher als Komponente B eingesetzt, die zu einer Quellung des mindestens einen Polyurethans (Komponente A) führen, was sich beispielsweise durch die Erhöhung der Viskosität der erfindungsgemäßen Klebstoffformulierung im Vergleich zur einer entsprechenden Formulierung in Abwesenheit des Weichmachers zeigt.

Der mindestens eine Weichmacher (Komponente B) liegt in der in der erfindungsgemäßen Klebstoffformulierung vorliegenden Mischung in einer Menge von 5 bis 45 Gew.-%, bevorzugt 10 bis 40 Gew.-%, besonders bevorzugt 10 bis 35 Gew.-%, jeweils bezogen auf die Summe der Mengen der in der in der Mischung vorliegenden Komponenten, A, B, C und ggf. D, vor.

### Komponente C:

Die erfindungsgemäße Mischung enthält des Weiteren mindestens ein Salz als Komponente C. Im Allgemeinen können als Komponente C alle dem Fachmann bekannten Salze eingesetzt werden.

Bevorzugt werden als Komponente C Salze ausgewählt aus der Gruppe bestehend aus Ammoniumsalzen, Alkalisalzen, Erdalkalimetallsalzen, Aluminiumsalzen, Zinksalzen und Mischungen davon eingesetzt. Weiter bevorzugt weisen die erfindungsgemäß eingesetzten Salze eine gute Wasserlöslichkeit auf, d.h. eine Wasserlöslichkeit von mindestens 0,5 mol/l bei 20 °C. Erfindungsgemäß bevorzugt werden Salze einwertiger Kationen eingesetzt. Besonders bevorzugt wird als Komponente C mindestens ein Salz ausgewählt aus der Gruppe bestehend aus Ammoniumsalzen, Natriumsalzen, Kaliumsalzen, Lithiumsalzen und Mischungen davon eingesetzt. Weiter bevorzugt wird als Komponente C mindestens ein Salz eingesetzt basierend auf mindestens einem Anion, welches sich von mindestens einer Säure ableitet, die in wässriger Lösung stark dissoziiert, weiter bevorzugt von mindestens einer Säure, deren pKs-Wert kleiner als 3 ist. Bevorzugt liegt die Komponente C folglich in der erfindungsgemäßen Klebstoffformulierung in dissoziierter Form als in Wasser gelöste Kationen und Anionen vor.

Erfindungsgemäß weiter bevorzugt wird als Komponente C mindestens ein Salz eingesetzt, ausgewählt aus der Gruppe bestehend aus Lithiumsalzen, Ammoniumsalzen, Natriumsalzen und/oder Kaliumsalzen, deren Anion Chlorid, Bromid, Iodid und/oder Sulfat ist. Ganz besonders bevorzugt werden Chloride.

Das erfindungsgemäß als Komponente C eingesetzte mindestens eine Salz ist daher ganz besonders bevorzugt ausgewählt aus der Gruppe bestehend aus Natriumchlorid, Kaliumchlorid, Natriumsulfat, Natriumcarbonat, Kaliumsulfat, Kaliumcarbonat, Natriumhydrogencarbonat, Kaliumhydrogencarbonat und Mischungen davon, wobei Natriumchlorid am meisten bevorzugt ist.

Es können auch Mischungen verschiedener Salze gemäß obiger Beschreibung als Komponente C eingesetzt werden.

Das mindestens eine Salz (Komponente C) liegt in der in der erfindungsgemäßen wässrigen Klebstoffformulierung vorliegenden Mischung in einer Menge von 0,001 bis 3 Gew.-%, bevorzugt 0,01 bis 2 Gew.-%, besonders bevorzugt 0,05 bis 1 Gew.-%, jeweils bezogen auf die Summe der Mengen der in der in der Mischung vorliegenden Komponenten, A, B, C und ggf. D, vor.

Bevorzugt wird die Menge an mindestens einem Salz so gewählt, dass die maximale Menge an mindestens einem Salz der erfindungsgemäßen Klebstoffformulierung zugesetzt wird, die nicht zu einem wesentlichen Auftreten von Koagulat innerhalb der ersten 24 h nach Herstellung der Klebstoffformulierung führt. Diese bevorzugte Menge an mindestens einem Salz kann durch den Fachmann leicht auf Basis von einfachen Versuchen angepasst werden, in denen die Menge so lange gesteigert wird, bis es zum deutlich sichtbaren Auftreten von Koagulat innerhalb einer Zeitspanne von 24 h nach Ansetzen der Formulierung kommt.

Bevorzugt wird das mindestens eine Salz vor dem Vermischen mit den weiteren Komponenten der erfindungsgemäßen Klebstoffformulierung in Wasser gelöst. Die Konzentration dieser Lösung wird dabei bevorzugt so gewählt, dass der Gehalt an Wasser in der Klebstoffformulierung möglichst gering gehalten werden kann, jedoch beim Einmischen keine lokalen temporären Konzentrationsspitzen auftreten, die zu Koagulation während der Zugabe der Salzlösung führen können. Die Salzlösung, die dabei zum Einsatz kommt, hat bevorzugt eine Konzentration von 0,001 bis 10 mol/l, besonders bevorzugt 0,05 bis 5 mol/l, ganz besonders bevorzugt von 0,1 bis 2 mol/l.

### Komponente D:

Die erfindungsgemäße Mischung enthält als optionale Komponente D gegebenenfalls mindestens ein weiteres Polymer.

Das als Komponente D gegebenenfalls vorliegende mindestens eine weitere Polymer ist erfindungsgemäß zu dem als Komponente A vorliegenden mindestens einen Polyurethan unterschiedlich, wobei es aber möglich ist, dass als Komponente D ebenfalls mindestens ein Polyurethan vorliegt, welches aber von dem als Komponente A vorliegenden mindestens einen Polyurethan unterschiedlich ist, beispielsweise weil die Schmelztemperatur und die Schmelzenthalpie außerhalb der für Polymer A beschriebenen Bereiche liegen.

Gegebenenfalls als Komponente D vorhandenes mindestens ein weiteres Polymer ist beispielsweise ausgewählt aus der Gruppe bestehend aus PU (Polyurethan), PVDC (Polyvinylidenchlorid), PVC (Polyvinylchlorid), PVA (Polyvinylacetat), EVA (Polyethylenvinylacetat), PAC (Polyacrylat), CR (Polychloropren), PS (Polystyrol), SBR (Polystyrolbutadien), NBR (Polyacrylnitril) und Mischungen davon.

Weiter bevorzugt wird als Komponente D mindestens ein nicht organohalogenhaltiges Polymer eingesetzt. Besonders bevorzugt werden von der erfindungsgemäßen Komponente A verschiedene Polyurethan- bzw. Polyurethan-Harnstoff-Polymere, PAC, EVA und/oder SBR einzeln oder als Mischung eingesetzt.

Bevorzugt wird das mindestens eine ggf. als Komponente D eingesetzte Polymer in Form einer wässrigen Polymerdispersion eingesetzt.

Liegt erfindungsgemäß mindestens ein weiteres Polymer als Komponente D vor, so liegt es in der in der erfindungsgemäßen wässrigen Klebstoffformulierung vorliegenden Mischung im Allgemeinen in einer Menge von 1 bis 40 Gew.-%, bevorzugt 3 bis 30 Gew.-%, besonders bevorzugt 5 bis 25 Gew.-%, jeweils bezogen auf die Summe der Mengen der in der in der Mischung vorliegenden Komponenten, A, B, C und ggf. D, vor.

Im Allgemeinen enthält die erfindungsgemäße wässrige Klebstoffformulierung weniger als 55 Gew.-% Wasser. Bevorzugt enthält die erfindungsgemäße wässrige Klebstoffformulierung 15 bis 50 Gew.-%, besonders bevorzugt 25 bis 50 Gew.-%, insbesondere bevorzugt 30 bis 47 Gew.-%, Wasser. Somit ist der nichtflüchtige Anteil der erfindungsgemäßen wässrigen Klebstoffformulierung, sofern diese neben Wasser keine wesentlichen Mengen von anderen flüchtigen Substanzen enthält, im Allgemeinen höher als 45 Gew.-%, bevorzugt 50 bis 85 Gew.-%, besonders bevorzugt 50 bis 75 Gew.-%, insbesondere bevorzugt 53 bis 70 Gew.-%.

Weiter betrifft die vorliegende Erfindung die erfindungsgemäße wässrige Klebstoffformulierung, wobei sie
(A) bevorzugt 30 bis 94,9 Gew.-%, besonders bevorzugt 52 bis 80Gew.-%, ganz besonders bevorzugt 55 bis 75 Gew.-%, der Komponente A,
(B) bevorzugt 5 bis 45 Gew.-%, besonders bevorzugt 10 bis 40 Gew.-%, ganz besonders bevorzugt 10 bis 35 Gew.-%, der Komponente B,
(C) bevorzugt 0,001 bis 3 Gew.-%, besonders bevorzugt 0,01 bis 2 Gew.-%, ganz besonders bevorzugt 0,05 bis 1 Gew.-%, der Komponente C und
(D) falls Komponente D vorliegt, bevorzugt 1 bis 30 Gew.-%, besonders bevorzugt 3 bis 30 Gew.-%, ganz besonders bevorzugt 5 bis 25 Gew.-%, der Komponente D enthält,
jeweils bezogen auf die Summe der Mengen der in der in der Mischung vorliegenden Komponenten, A, B, C und ggf. D, vor. Die Summe der Mengen der in der erfindungsgemäßen Mischung vorliegenden Komponenten A, B, C und ggf. D beträgt erfindungsgemäß 100 Gew.-%.

Neben der genannten Mischung enthaltend die Komponenten A, B, C und gegebenenfalls D, können in der erfindungsgemäßen Klebstoffformulierung gegebenenfalls weitere Additive vorliegen, beispielsweise in einer Menge von 0 bis 15 Gew.-%, bevorzugt 0,1 bis 15 Gew.-%, jeweils bezogen auf den nichtflüchtigen Anteil der erfindungsgemäßen Klebstoffformulierung.

Geeignete Additive sind beispielsweise ausgewählt aus der Gruppe bestehend aus Emulgatoren, Verdickern, Netzmitteln, Flammschutzmitteln, Konservierungsmitteln, Lichtschutzmitteln, Antioxidantien, Entschäumern, Lösungsmitteln, Alterungsschutzmitteln, Oxidationsschutzmitteln, UV-Schutzmitteln, Tackifierharzen, Frischsolen, Kieselsolen und Mischungen davon.

Geeignete Emulgatoren, insbesondere zur Stabilisierung der erfindungsgemäßen Klebstoffformulierung, sind beispielsweise externe Emulgatoren, insbesondere nichtionische Emulgatoren wie ethoxylierte und/oder propoxylierte Fettalkohole, beispielsweise Stearylalkoholpolyglykolether. Diese werden, jeweils bezogen auf den nichtflüchtigen Anteil der erfindungsgemäßen wässrigen Klebstoffformulierung in einer Menge von beispielsweise 0,05 bis 5 Gew-%, bevorzugt 0,2 bis 2,5% Gew-%, ganz besonders bevorzugt 0,5 bis 1,5 Gew.-%, eingesetzt. Wird in der erfindungsgemäßen Klebstoffformulierung mindestens ein Emulgator eingesetzt, so muss die Menge an mindestens einem Salz (Komponente C) gegebenenfalls angepasst, insbesondere erhöht, werden. Dies kann durch den Fachmann anhand orientierender Versuche ermittelt werden.

Bevorzugt enthält die erfindungsgemäße wässrige Klebstoffformulierung keine externen Emulgatoren.

Erfindungsgemäß können beispielsweise assoziative und/oder nichtassoziative Verdicker eingesetzt werden, wie sie dem Fachmann für die Formulierung von Beschichtungen und Klebstoffen auf Basis von Polyurethandispersionen bekannt sind.

In weiteren, jedoch nicht bevorzugten Ausführungsformen können zur Konservierung sogenannte in-can Konservierungmittel zugesetzt werden. Diese kommen beispielsweise in einer Menge von 0,002 bis 0,5 Gew. -%, bezogen auf die nichtflüchtige Anteile der wässrigen Klebstoffformulierung, zum Einsatz. Geeignete Verbindungen sind beispielsweise Verbindungen aus der Gruppe der Isothiazolone, insbesondere Benzisothiazolinon (BIT), Methylisothiazolinon (MIT) oder Chlormethylisothiazolinon (CMIT).

Als Tackifierharze bezeichnet man Harze, die als Klebrigmacher wirken und die die Adhäsionsfähigkeit eines Klebstoffes erhöhen. Als Tackifierharze können sowohl Naturharze als auch synthetische Harze eingesetzt werden, beispielsweise aliphatische, aromatisch modifizierte, aromatische oder hydrierte Kohlenwasserstoffharze, Terpenharze, modifizierte Terpenharze und Terpenphenolharze, oder Baumharzderivate, beispielsweise Kolophoniumharze, modifizierte Kolophoniumharze, beispielsweise Harzester auf Basis von Kolophonium ("rosin ester"), Balsamharzderivate ("gum rosin") und Tallöl-Derivate ("tall oil rosin"). Die Tackifierharze können einzeln oder als Mischungen eingesetzt werden. Bevorzugt werden als Tackifierharze Kolophoniumharze und modifizierte Kolophoniumharze eingesetzt. Besonders bevorzugt werden Harzester auf Basis von Kolophonium eingesetzt. Die Tackifierharze können in Substanz oder in in Wasser dispergierter Form in der erfindungsgemäßen Klebstoffformulierung eingesetzt werden, sofern Verträglichkeit, beispielsweise Stabilität gegen Phasentrennung, gegeben ist. In einer besonders bevorzugten Ausführung der der vorliegenden Erfindung werden wässrige Dispersionen von Kolophoniumharzestern ("rosin ester dispersions") eingesetzt. Sollten Tackifierharze eingesetzt werden, so werden diese in einer Menge von bevorzugt 0,5 bis 15 Gew.-%, bezogen auf den nichtflüchtigen Anteil der erfindungsgemäßen wässrigen Klebstoffformulierung verwendet.

Ebenfalls möglich, wenn auch nicht bevorzugt, ist ein Einsatz organischer Lösungsmittel in der erfindungsgemäßen wässrigen Klebstoffformulierung, beispielsweise Toluol, Xylol, Butylacetat, Methylethylketon, Ethylacetat, Dioxan oder deren Gemische, jeweils in einer Menge von bevorzugt 0,5 bis 10 Gew.-%, bezogen auf die nichtflüchtigen Anteile der erfindungsgemäßen wässrigen Klebstoffformulierung.

Übliche Alterungsschutzmittel, Oxidationsschutzmittel und/oder UV-Schutzmittel sind beispielsweise solche auf der Basis von oligofunktionellen sekundären aromatischen Aminen oder oligofunktionellen substituierten Phenolen. Typischerweise werden entsprechende Alterungsschutzmittel, Oxidationsschutzmittel und/oder UV-Schutzmittel in emulgierter Form als wässrige Dispersion eingebracht. Alterungsschutzmittel, Oxidationsschutzmittel und/oder UV-Schutzmittel können erfindungsgemäß in einer Menge von 0,1 bis 5 Gew.-%, bevorzugt 1 bis 3 Gew.-%, besonders bevorzugt 1,5 bis 2,5 Gew.-%, jeweils bezogen auf den nichtflüchtigen Anteil der erfindungsgemäßen wässrigen Klebstoffformulierung, eingesetzt werden.

Als weitere Additive können Frisch- und/oder Kieselsole eingesetzt werden, beispielsweise zur Reduktion von Kosten der Klebstoffformulierung. Kieselsole sind seit langem bekannt. Kieselsole sind kolloidale Lösungen von amorphem Siliciumdioxid in Wasser. Das Siliciumdioxid liegt dabei bevorzugt in Form von kugelförmigen und an der Oberfläche hydroxylierten Partikeln vor. Der Partikeldurchmesser der Kolloidteilchen beträgt in der Regel 1 bis 200 nm (Bestimmt durch Laserbeugung), wobei die zur Teilchengröße korrelierende spezifische BET-Oberfläche, bestimmt nach der Methode von G. N. Sears, Analytical Chemistry Vol. 28, N. 12, Seiten 1981 bis 1983, Dezember 1956, bevorzugt bei 15 bis 2000 m²/g liegt. Die Oberfläche der SiOz-Teilchen weist bevorzugt eine Ladung auf, die durch ein entsprechendes Gegenion ausgeglichen wird, das zur Stabilisierung der kolloidalen Lösung führt. Die alkalisch stabilisierten Kieselsole besitzen beispielsweise einen pH-Wert von 7 bis 11,5 und enthalten als Alkalisierungsmittel beispielsweise geringe Mengen NazO, KzO, LizO, Ammoniak, organische Stickstoffbasen, Tetraalkylammoniumhydroxide oder Alkali- oder Ammoniumaluminate. Kieselsole können auch als semistabile kolloidale Lösungen schwach sauer vorliegen. Erfindungsgemäß wird mindestens ein modifiziertes Kieselsol eingesetzt. Beispielsweise ist es möglich, durch Beschichtung der Oberfläche mit metallhaltigen Verbindungen, insbesondere aluminiumhaltigen Verbindungen, beispielsweise Al₂(OH)₅Cl, insbesondere an der Oberfläche, modifizierte Kieselsole zu erhalten. Geeignete Kieselsole sind beispielsweise unter dem Handelsnamen Dispercoll^{®} S von Covestro, Leverkusen erhältlich.

Im Rahmen der vorliegenden Erfindung wird unter dem Begriff "Frischsol" eine verdünnte Kieselsäurelsöung Si(OH)₄ verstanden.

Sollten Kieselsole und/oder Frischsol eingesetzt werden, so werden diese in einer Menge von bevorzugt 0,5 bis 5 Gew.-%, bezogen auf nichtflüchtige Anteile der erfindungsgemäßen wässrigen Klebstoffformulierung, verwendet.

Die Herstellung der erfindungsgemäßen Klebstoffformulierungen erfolgt bevorzugt durch Mischen der Komponenten miteinander.

Die vorliegende Erfindung betrifft daher auch ein Verfahren zur Herstellung der erfindungsgemäßen wässrigen Klebstoffformulierung durch Mischen der einzelnen Komponenten.

Bevorzugt erfolgt die Herstellung der erfindungsgemäßen wässrigen Klebstoffformulierung durch Mischen einer wässrigen Polyurethan-Dispersion (Komponente A) mit dem mindestens einen Weichmacher (Komponente B) und gegebenenfalls einer Dispersion des mindestens einen weiteren Polymers (Komponente D) und einer wässrigen Lösung des mindestens einen Salzes (Komponente C).

In einer besonders bevorzugten Ausführungsform des erfindungsgemäßen Verfahrens werden zunächst die Komponente A und B und ggf. die Komponente D gemischt. Komponente C wird bevorzugt zu dieser Mischung gegeben, nachdem die Mischung aus den Komponenten A, B und ggf. D eine konstante Viskosität erreicht hat.

Das erfindungsgemäße Verfahren zur Herstellung der erfindungsgemäßen wässrigen Klebstoffformulierung, wie auch die Herstellung der einzelnen eingesetzten Lösungen oder Dispersionen, kann im Allgemeinen bei allen dem Fachmann als geeignet erscheinenden Bedingungen erfolgen, beispielsweise bei einer Temperatur von 18 bis 28 °C, idealerweise bei Raumtemperatur (23 °C), weiter bevorzugt in dem Fachmann bekannten Apparaturen, beispielweise in Edelstahl-, Glas- oder in emaillierten verfahrenstechnischen Apparaten. Bei der Herstellung der erfindungsgemäßen wässrigen Klebstoffformulierung sind Rostbildung und lösliche Metalllegierungen u.a. aus Aluminiumbehältern, zu vermeiden.

Die vorliegende Erfindung betrifft des Weiteren auch das erfindungsgemäße Verfahren zur Herstellung einer Klebung von Substraten, wobei eine erfindungsgemäße Klebstoffformulierung auf mindestens ein Substrat appliziert wird und anschließend, beispielsweise nach höchstens 5 min, bevorzugt nach höchstens 2 min, besonders bevorzugt nach höchstens 1 min, eine Klebung erfolgt. Bevorzugt erfolgt die erfindungsgemäße Klebung vor Abschluss der Filmbildung. Dieses erfindungsgemäße Verfahren wird auch 1K- bzw. 1K(omponenten)-Verfahren genannt.

Die erfindungsgemäße Klebstoffformulierung kann dabei im Allgemeinen mittels aller gängigen Applikationsformen auf die Substrate aufgebracht werden, insbesondere durch Streichen, Rollen, Spritzen und/oder Sprühen, insbesondere durch Sprühauftrag, Pinselauftrag oder Walzenauftrag. Bevorzugt erfolgt der Auftrag der erfindungsgemäßen Klebstoffformulierung mittels Sprühapplikation. Im Allgemeinen ist es vorteilhaft, wenn durch die Applikation eine gewisse Scherbelastung der Formulierung, z.B. beim Durchtritt durch die Sprühdüse, auftritt.

Erfindungsgemäß geeignete Substrate sind beispielsweise Holz, Papier, thermoplastische Kunststoffe, elastomere Kunststoffe, thermoplastisch-elastomere Kunststoffe, Vulkanisate, textile Gewebe, Gewirke, Geflechte, Leder, Metalle, Keramik, Asbestzement, Steinzeug, Beton, Schaumstoffe, jeweils miteinander und/oder an porige Substrate, bevorzugt mit einer Dichte von weniger als 1 kg/Liter.

Insbesondere betrifft die vorliegende Erfindung das erfindungsgemäße Verfahren zur Herstellung einer Klebung, wobei eine erfindungsgemäße Klebstoffformulierung zum Beispiel mittels Sprühauftrag, Walzenauftrag oder Pinselauftrag auf ein Schaumstoff-Substrat appliziert wird und nach einer Ablüftungszeit von bevorzugt weniger als 5 min, besonders bevorzugt weniger als 2 min, ganz besonders bevorzugt weniger als 1 min, eine Nassklebung vor Filmbildung erzeugt wird.

Die vorliegende Erfindung betrifft des Weiteren auch das erfindungsgemäße Verfahren zur Herstellung eines Verbundmaterials durch Klebung der einzelnen Fügeteile des Verbundmaterials, wobei die erfindungsgemäße wässrige Klebstoffformulierung, eingesetzt wird.

Die vorliegende Erfindung betrifft auch die Verwendung der erfindungsgemäßen Klebstoffformulierung zur Klebung von Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen, jeweils miteinander und/oder an porige Substrate, bevorzugt mit einer Dichte von weniger als 1 kg/Liter, insbesondere zur Klebung von Schaumstoffen in der Matratzen-, Möbel- und/oder Polsterverklebung, insbesondere in einem 1K(omponenten)-Verfahren oder in einem 2K(omponenten)-Verfahren, bevorzugt in einem 1K(omponenten)-Verfahren.

Die erfindungsgemäße Klebstoffformulierung kann des Weiteren auch in einem 2K(omponenten)-Verfahren (2K-Verfahren) verwendet werden.

Die vorliegende Erfindung betrifft des Weiteren das erfindungsgemäße Verfahren, wobei es als 2K(omponenten)-Verfahren durchgeführt wird.

Üblicherweise wird dabei mit Zerstäuberluft mit einem Druck von 0,1 bis 5 bar versprüht; es kann aber auch mindestens eine der beiden Komponenten Airless gefördert werden, wie es z.B. in der WO 2015/137808 beschrieben wird. Die Koagulation der Dispersion findet im Sprühstrahl auf dem Weg zur Oberfläche des ersten Substrats statt; dabei verdunstet bereits ein Teil des in der Klebstoffdispersion enthaltenen Wassers. Das Klebstoffpolymer bildet auf der Oberfläche des ersten Substrats bei Auftreffen einen Film der in noch nassem Zustand sofort klebrig ist. Da die Vermischung von Klebstoffdispersion und Koagulationsmittel erst im Sprühstrahl stattfindet, ist keine Topfzeit zu beachten. Aufgrund der Klebrigkeit des Polymerfilms in nassem Zustand kann die zweite Oberfläche sofort gefügt werden, idealerweise zum Beispiel unter Druck auf die Substrate gegen die Klebfläche. Die Anwendung von Druck durch Zusammenpressen der beiden Substratoberflächen ist von Vorteil, da sie die Festigkeit der Klebung erhöht. Ebenso ist es von Vorteil, wenn zumindest eines der beiden Substrate porös bzw. durchlässig gegenüber Wasser ist, um den Abtransport des Wasser aus der sich verfestigenden Klebstofffuge zu ermöglichen.

Als Koagulationsmittel kommen wässrige Lösungen von Salzen, bevorzugt von Metallen der ersten, zweiten und dritten Hauptgruppe des Periodensystems, in Frage, insbesondere solche, die eine gute Wasserlöslichkeit aufweisen. Bevorzugt werden Salze auf Basis zwei- oder dreiwertiger Kationen eingesetzt. Besonders bevorzugt werden Calciumchlorid, Zinksulfat oder Aluminiumsulfat eingesetzt. Ganz besonders bevorzugt wird Calciumchlorid eingesetzt. Es können auch Mischungen verschiedener Salze gemäß obiger Beschreibung als wässrige Lösung eingesetzt werden.

Die Konzentration der Salze in den als Koagulationsmittel geeigneten wässrigen Salzlösungen beträgt beispielsweise 1 bis 20 Gew.-%, bevorzugt 2 bis 10 Gew.-%, und besonders bevorzugt 3 bis 4 Gew.-%. Der Anteil der wässrigen Lösung des Koagulationsmittels bezogen auf die Summe Klebstofflösung plus Koagulationsmittellösung beträgt beispielsweise 0,1 bis 50 Gew.-%, bevorzugt 1 bis 30 Gew.-%, besonders bevorzugt 8 bis 20 Gew.-% und ganz besonders bevorzugt 12 bis 18 Gew.-%.

Alternativ können als Koagulationsmittel auch wässrige Lösungen von anorganischen oder organischen Säuren, bevorzugt Zitronensäure, Phosphorsäure oder Kohlensäure, sowie Mischungen einer oder mehrerer o.g. Salze mit einer oder mehrerer dieser Säuren eingesetzt werden. Die vorliegende Erfindung wird durch die folgenden Beispiele näher erläutert:

### Beispiele

### Einsatzstoffe

| | |
|---|---|
| Polyester I: | Polyesterdiol aus 1,4-Butandiol und Adipinsäure, OH-Zahl 50 |
| Polyester II: | Polyesterdiol aus 1,6-Hexandiol, Neopentylglycol und Adipinsäure, OH-Zahl 56 |
| Polyester III: | Polyesterdiol aus 1,6-Hexandiol und Phthalsäureanhydrid, OH-Zahl 56 |
| Desmodur^{®} H: | Hexamethylendiisocyanat-1,6 (Covestro Deutschland AG, Leverkusen/DE) |
| Desmodur^{®} I: | Isophorondiisocyanat (Covestro Deutschland AG, Leverkusen/DE) |
| Lucramul^{®} 1820 liq: | Emulgator, 15 gew.-%ige Lösung von Stearylalkoholpolyglykolether in Wasser (LEVACO Chemicals GmbH, Leverkusen) |
| Benzoflex^{®} 9-88: | Weichmacher auf Basis Dibenzoat, Hauptbestandteil Dipropylenglykoldibenzoat (CAS-Nr. 27138-31-4, Firma Eastmann) |

### Beispiel 1:

### Herstellung einer wässrigen Polyurethan-Dispersion

450 g Polyester I und 42,67 g Polyester II werden 1 Stunde bei 110 °C und 15 mbar A entwässert. Bei 60 °C werden unter Rühren zunächst 2,24 g 1,4-Butandiol und danach eine Mischung aus 38,02 g Desmodur^{®} H und 25,11 g Desmodur^{®} I zugegeben. Die Mischung wird auf 80 °C erwärmt und solange gerührt, bis ein konstanter Isocyanatgehalt von 1,30 Gew.-% erreicht ist. Das Reaktionsgemisch wird in 770 g Aceton gelöst und dabei auf 48 °C abgekühlt. In die homogene Lösung wird eine Lösung aus 6,56 g Natriumsalz der N-(2-Aminoethyl)-2-aminoethansulfonsäure und 5,16 g Diethanolamin in 100 g Wasser unter kräftigem Rühren gegeben. Nach 30 Minuten wird durch Zugabe von 470 g Wasser dispergiert. Nach destillativer Abtrennung des Acetons wird eine wässrige Polyurethan-PolyharnstoffDispersion mit einem nichtflüchtigen Anteil von 50,0 Gew.-% erhalten. Das enthaltene Polymer ist nach der Trocknung teilkristallin mit einer Schmelztemperatur von 49 °C und einer Schmelzenthalpie von 57,0 J/g.

### Beispiel 2:

### Herstellung einer wässrigen Polyurethan-Dispersion

450 g Polyester I und 42,67 g Polyester II werden 1 Stunde bei 110 °C und 15 mbar A entwässert. Bei 60 °C werden unter Rühren zunächst 2,24 g 1,4-Butandiol und danach eine Mischung aus 38,02 g Desmodur^{®} H und 25,11 g Desmodur^{®} I zugegeben. Die Mischung wird auf 80 °C erwärmt und solange gerührt, bis ein konstanter Isocyanatgehalt von 1,30 Gew.-% erreicht ist. Das Reaktionsgemisch wird in 770 g Aceton gelöst und dabei auf 48 °C abgekühlt. In die homogene Lösung wird eine Lösung aus 6,56 g Natriumsalz der N-(2-Aminoethyl)-2-aminoethansulfonsäure und 5,16 g Diethanolamin in 100 g Wasser unter kräftigem Rühren gegeben. Nach 30 Minuten wird durch Zugabe von 445 g Wasser dispergiert. Nach destillativer Abtrennung des Acetons werden unter Rühren 30,8 g Lucramul^{®} 1820 liquid zugegeben. Es wird eine wässrige Polyurethan-Polyharnstoff-Dispersion mit einem nichtflüchtigen Anteil von 50,0 Gew.-% erhalten. Das enthaltene Polymer ist nach der Trocknung teilkristallin mit einer Schmelztemperatur von 49 °C und einer Schmelzenthalpie von 56,0 J/g.

### Beispiel 3:

### Herstellung einer wässrigen Polyurethan-Dispersion.

450 g Polyester I werden 1 Stunde bei 110 °C und 15 mbar A entwässert. Bei 80 °C werden 30,11 g Desmodur^{®} H und anschließend 20,14 g Desmodur^{®} I zugegeben. Die Mischung wird bei 80 bis 90 °C gerührt, bis ein konstanter Isocyanatgehalt von 1,15 Gew.-% erreicht ist. Das Reaktionsgemisch wird in 750 g Aceton gelöst und dabei auf 48 °C abgekühlt. In die homogene Lösung wird eine Lösung aus 5,95 g Natriumsalz der N-(2-Aminoethyl)-2-aminoethansulfonsäure und 2,57 g Diethanolamin in 65 g Wasser unter kräftigem Rühren gegeben. Nach 30 Minuten wird durch Zugabe von 700 g Wasser dispergiert. Nach destillativer Abtrennung des Acetons wird eine wässrige Polyurethan-Polyharnstoff-Dispersion mit einen nichtflüchtigen Anteil von 40,0 Gew.-% erhalten. Das enthaltene Polymer ist nach der Trocknung teilkristallin mit einer Schmelztemperatur von 48 °C und einer Schmelzenthalpie von 50,4 J/g.

### Beispiel 4: (Vergleichsbeispiel)

### Herstellung einer wässrigen Polyurethan- bzw. Polyurethan-Harnstoff-Dispersion.

1215 g Polyester III werden 1 Stunde bei 110 °C und 15 mbar A entwässert. Bei 80 °C werden 4,6 g 1,6-Hexandiol und 179,0 g Desmodur^{®} H zugegeben und die Mischung wird 90 °C gerührt, bis ein konstanter Isocyanatgehalt von 2,28 Gew.-% erreicht ist. Das Reaktionsgemisch wird in 2490 g Aceton gelöst und dabei auf 48 °C abgekühlt. In die homogene Lösung wird eine Lösung aus 31,9 g Natriumsalz der N-(2-Aminoethyl)-2-aminoethansulfonsäure in 300 g Wasser unter kräftigem Rühren gegeben. Nach 30 Minuten wird durch Zugabe von 1150 g Wasser dispergiert. Nach destillativer Abtrennung des Acetons wird eine wässrige Polyurethan-Polyharnstoff-Dispersion mit einen nichtflüchtigen Anteil von 50,0 Gew.-% erhalten. Das enthaltene Polymer ist nach der Trocknung amorph, d.h. es weist keinen Schmelzpeak im DSC auf.

### Herstellung der Klebstoffformulierungen

Die Herstellung der Klebstoffformulierungen erfolgte jeweils in einem 900 ml Polybecher mit VISCO JET^{®}-Rührer. Zu Beginn wird bei einer Rührgeschwindigkeit von ca. 600 U/min die Polyurethan- bzw Polyharnstoffdispersion (Komponente A) vorgelegt, und anschließend wird unter Rühren der Weichmacher (Komponente B) zugegeben. Nach Zugabe des Weichmachers und im Laufe des Mischprozesses steigt die Viskosität stark an. Dabei muss die Rührgeschwindigkeit angepasst werden bis sich wieder ein Strudel an der Rührstange eingestellt hat. Nach Beendigung der Rührzeit von 120 min erfolgt die Zugabe der Salzlösung (Komponente C), die zuvor durch Lösen des Salzes in Wasser in der angegebenen Konzentration hergestellt wurden.

Nach der Nachrührzeit von 15 Minuten wird die Formulierung durch Filtration (als Filter wird ein Nylon-Gewebe mit einer Porengröße von 125 µm verwendet (E-D-SCHNELLSIEB^{®} super-fein 125my (blaues Nylon-Gewebe))) auf gebildetes Koagulat geprüft. Wird hierbei kein deutlich sichtbares Koagulat auf dem Filter gefunden wird die Formulierung in eine Glasflasche umgefüllt, und diese wird verschlossen. Nach frühestens 12 Stunden Standzeit wird durch Filtration wie oben beschrieben erneut auf Koagulat geprüft. Die Formulierungen gelten als ausreichend lagerstabil, wenn sich auch nach der zweiten Filtration kein deutlich sichtbares Koagulat auf dem Filter befindet. In Zweifelsfällen ist die Menge des auf dem Filter verbliebenen Koagulates zu bestimmen. Hierzu wird die Masse des Koagulates auf dem Filterpapier nach Trocknung durch Zurückwiegen des Filterpapiers bestimmt. Dabei gilt die Anforderung an die Lagerstabilität als erfüllt, wenn die Menge des Koagulates nicht die Menge übersteigt, die 1 Gew.-% der in der Klebstoffformulierung enthaltenen Menge des Polymers A und ggf. D (in Summe) entspricht.

### Methoden/Messmethoden:

Folgende Methoden bzw. Messmethoden kamen bei den erfindungsgemäßen Beispielen und/oder Vergleichsbespielen zum Einsatz.

### Auftrag der Klebstoffformulierung und Beurteilung

1) Sprühverfahren 1):Es wurde mit einer Standard-Spritzpistole für Zweikomponenten-Dispersionsklebstoffe (Waltherbond 2K der Fa. Walther Pilot) ohne Koagulationsmittel vollflächig appliziert. Das Auftragsgewicht konnte durch Rückwiegen der Substrate unmittelbar nach Applikation ermittelt werden.

Folgende Einstellungen der Spritzpistole kamen zum Einsatz:
Klebstoffkomponente: Förderdruck 1,3 bis 1,5 bar
Zerstäuberluftdruck: 2,8 bar
Bohrung (Düse) f. Klebstoffkomponente 0,8 mm
Umdrehung der Materialdüse 0,5 bis 1 Umdrehung
Auftragsgewichte: 100 bis 200 g/m² (nass)

### 2) Sprühverfahren 2)

Verwendet wurde eine Wagner Farbsprühsystem mit dem Sprühaufsatz Wood&Metal Extra Detail, Artikel-Nummer: 2361 744, Druckluft: 1,0 - 1,5bar.

### 3) Prüfkörper

Es wurden die im Folgenden beschriebenen PU-Schaumkörper verwendet.

Firma stn/schaumstoff-technik-Nürnberg GmbH Typ ST 5540, Abmessungen der Prüfkörper: 100 mm × 50 mm × 30 mm, Materialbasis PUR, Farbe weiß, Nettorohdichte 38 kg/m³ gemäß ISO-845: 2009-10, Stauchhärte bei 40% 5,5 (kPa) gemäß DIN EN ISO 3386: 2015-10, Zugfestigkeit > 120 kpa gemäß DIN EN ISO 1798: 2008-04, Bruchdehnung > 110% gemäß ISO-1798: 2008-04, Druckverformungsrest < 4% gemäß DIN EN ISO-1856: 2018-11 (50%/70 °C/22h)

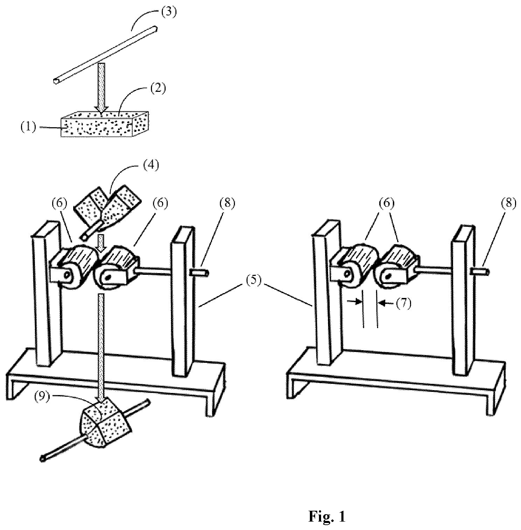

### 4) Bestimmung der Anfangsfestigkeit (siehe Figur 1)

Als Prüfmaterial werden Prüfkörper wie unter 3) beschrieben verwendet. Zur Beurteilung der Anfangsfestigkeit werden die Prüfkörper unmittelbar nach dem Klebstoff-Auftrag auf die Oberseite (2) der Schaumstoffkörper (1) mittels Sprühverfahrens (Auftragsmenge 100 bis 200 g/m² nass) mit einem Holzstab (3) (Vierkant 7 × 7 mm) in der Mitte geknickt (4) und mittels der Prüfvorrichtung (5) durch 2 Stahlrollen (6) (Durchmesser 40 mm, Länge 64 mm) geführt, deren tangentialer Abstand (7) zuvor mit einer Gewindespindel (8) auf 10 mm eingestellt wurde.

### 5) Beurteilung der Anfangsfestigkeit

### sehr gut (1):

Die Spannung wird nach einmaligem Durchziehen des Prüfkörpers durch den Spalt zwischen den beiden Walzen sofort gehalten. Wird der Schaumkörper nach 120 Sekunden beidseitig auseinandergezogen, erfolgt Materialausriss, bzw. der Schaumkörper lässt sich nur mit sehr hohem Kraftaufwand wieder öffnen.

### gut (2):

Die Spannung wird nach einmaligem Durchziehen des Prüfkörpers durch den Spalt zwischen den beiden Walzen sofort gehalten, und der Schaumkörper lässt sich nach 120 Sekunden bei beidseitigem Auseinanderziehens ohne hohen Kraftaufwand wieder öffnen.

### mangelhaft (3):

Der Prüfkörper öffnet sich nach einmaligem Durchziehen des Prüfkörpers durch den Spalt zwischen den beiden Walzen. Erst durch Wiederholung bzw. per Handdruck (1x ca. 1s angedrückt) bleibt der Prüfkörper geschlossen.

### ungenügend (4):

Die Spannung wird selbst bei mehrmaligem Andrücken (Walzenverfahren und per Hand gepresst) nicht gehalten.

### 6) Ermittlung der Glastemperaturen, Schmelztemperaturen und Schmelzenthalpien mittels DSC

Die Glastemperaturen sowie Schmelztemperaturen und Schmelzenthalpien wurden mittels Differential Scanning Calorimetry (DSC) mit einem Kalorimeter Pyris Diamond DSC der Firma Perkin-Elmer bestimmt. Dazu wurde ein Film durch Rakeln der Dispersion mit 100 µm Nassfilmdichte auf eine Glasplatte hergestellt und dieser 3 Tage bei Raumtemperatur und 0% Raumfeuchte in einer Trockenbox getrocknet. Anschließend wurde mit 10 mg Probenmaterial die DSC-Kurve mit folgenden Messbedingungen aufgenommen: Schnelle Abkühlung auf die Starttemperatur von -100 °C, danach Beginn von drei Aufheizungen von -100 bis +150 °C mit einer Heizrate von 20K/min und einer Kühlrate von 320K/min unter Helium-Atmosphäre und Kühlung mit flüssigem Stickstoff. Die Glastemperatur entspricht der Temperatur bei halber Höhe des Glasübergangs, wobei die dritte Aufheizung ausgewertet wurde. Für die Bestimmung der Schmelztemperaturen und Schmelzenthalpien wurde die erste Aufheizung ausgewertet.

**Tabelle 1: Untersuchungen an erfindungsgemäßen Formulierungen und Vergleichsformulierungen**

| | **Beispiel Nr.** | | |
|---|---|---|---|
| **Inhaltsstoff** | 5 | V6 | V7 |
| **Polymerdispersion aus Beispiel 1** | 78,74 | 78,74 | - |
| **Polymerdispersion aus Beispiel 4** | - | - | 78,74 |
| **Benzoflex^{®} 9-88** | 17,32 | 17,32 | 17,32 |
| **NaCl-Lösung in VE Wasser c=20g NaCl/l** | 3,94 | - | - |
| **NaCl-Lösung in VE Wasser c=58g NaCl/l** | - | - | 3,94 |
| **Vollentsalztes (VE) Wasser** | - | 3,94 | - |
| **Summe** | 100 | 100 | 100 |
| **Filterrückstand nach 24 h [g]** | 0 | 0 | 0 |
| **Anfangsfestigkeit *** | 2 | 4 | 4 |

| | | | |
|---|---|---|---|
| V Vergleich Alle Angaben in Gew.-%, sofern nicht anders angegeben * Sprühverfahren 1: Walther Pilot Einstellungen 1,2 bar Material, 2,5 bar Zerstäuber, Material-düse: 1,0 Umdrehung, Auftragsmenge: 0,5 g (entspricht 100 g/m²) | | | |

Die in Tabelle 1 enthaltenen Ergebnisse zeigen, dass die Kombination der erfindungsgemäßen Komponenten A, B und C zu einer guten Anfangsfestigkeit und guter Lagerstabilität führt (Beispiel 5), wohingegen die Abwesenheit der erfindungsgemäßen Komponente C (Beispiel V6), sowie die alleinige Verwendung eines amorphen Polyurethans (Beispiel V7) nicht zu guten Anfangsfestigkeiten führen.

**Tabelle 2: Untersuchungen an erfindungsgemäßen Formulierungen und Vergleichsformulierungen**

| | **Beispiel-Nr.** | | | | | |
|---|---|---|---|---|---|---|
| **Inhaltsstoff** | 8 | 9 | V10 | V11 | V12 | V13 |
| **Polymerdispersion aus Beispiel 1** | 78,74 | - | 96,00 | - | 81,95 | 78,70 |
| **Polymerdispersion aus Beispiel 2** | - | 47,10 | - | - | - | - |
| **Polymerdispersion aus Beispiel 3** | - | 25,35 | - | | - | - |
| **Polymerdispersion aus Beispiel 4** | - | 6,33 | - | 78,74 | - | - |
| **Benzoflex^{®} 9-88** | 17,32 | 17,32 | - | 17,32 | 18,05 | 17,30 |
| **NaCl-Lösung in VE Wasser c=20g NaCl/l** | 3,94 | - | - | - | - | - |
| **NaCl-Lösung in VE Wasser c=58g NaCl/l** | - | 3,90 | 4,00 | 3,94 | - | - |
| **Vollentsalztes (VE) Wasser** | - | - | - | - | - | 4,00 |
| **Summe** | 100 | 100 | 100 | 100 | 100 | 100 |
| **Filterrückstand nach 24 h [g]** | 0 | 0 | 0 | 0 | 0 | 0 |
| **Anfangsfestigkeit*** | 2 | 2 | 4 | 4 | 4 | 4 |

| | | | | | | |
|---|---|---|---|---|---|---|
| V Vergleich Alle Angaben in Gew.-%, sofern nicht anders angegeben *Sprühverfahren 2: Wagner - Zerstäuberdruck: < 1,0 bar, Auftragsmenge: 0,4 bis 0,6 g, (entspricht 100 g/m²) | | | | | | |

Es zeigt sich bei den in Tabelle 2 dargestellten Versuchen mit einer einfachen Spritzpistole, dass nur die erfindungsgemäße Kombination der Komponenten A, B und C zu guten Anfangsfestigkeiten unmittelbar nach Applikation und guter Lagerstabilität führt (Beispiele 8 und 9). In Abwesenheit der Komponenten A (Beispiel V10), B (Beispiel V11), und C (Beispiele V 12 und V13) werden jeweils keine zufriedenstellenden Anfangsfestigkeiten erhalten. Ebenfalls gute Anfangsfestigkeiten werden dann erhalten, wenn als Komponente D) ein amorphes Polyurethan (Polymer aus Beispiel 4) verwendet wird.

**Tabelle 3: Untersuchungen an erfindungsgemäßen Formulierungen mit verschiedenen Salzen**

| | **Beispiel-Nr.** | | |
|---|---|---|---|
| **Inhaltsstoff** | 14 | 15 | 16 |
| **Polymerdispersion aus Beispiel 1** | 78,74 | 78,74 | 78,74 |
| **Benzoflex^{®} 9-88** | 17,32 | 17,32 | 17,32 |
| **KCl (0,15 mol/l in VE-Wasser)** | 3,94 | - | - |
| **LiCl (0,15 mol/l in VE-Wasser)** | - | 3,94 | - |
| **NH₄Cl (0,15 mol/l in VE-Wasser)** | - | - | 3,94 |
| **Summe** | 100 | 100 | 100 |
| **Filterrückstand nach 24 h [g]** | 0 | 0 | 0 |
| **Anfangsfestigkeit*** | 2 | 2 | 2 |

| | | | |
|---|---|---|---|
| Alle Angaben in Gew.-%, sofern nicht anders angegeben *Applikationseinstellung: Walther Pilot Einstellungen 1,2 bar Material, 2,5bar Zerstäuber, Materialdüse: 0,5 Umdrehung Auftragsmenge: 0,5 bis 0,7 g (entspricht 100 g/m²) | | | |

Die Ergebnisse in Tabelle 3 (Beispiele 14-16) zeigen, dass neben NaCl auch KCl, LiCl und NH₄Cl als Komponente C lagerstabile, erfindungsgemäße Formulierungen ergeben, die gute Anfangsfestigkeiten führen.

### Verwendung der erfindungsgemäßen Klebstoffformulierung im 2K-Sprühkoagulationsverfahren:

Formulierung 9 wird mit einer Standard-Spritzpistole für Zweikomponenten-Dispersionsklebstoffe, nämlich der PILOT III 2K von der Firma Walther Pilot, appliziert. Dabei werden der Klebstoff, sowie das Koagulationsmittel CaCl₂ (3 Gew.-%ige Lösung in Wasser) separat in die Sprühpistole gefördert, im Sprühstrahl vermischt und der Klebstoff koaguliert. Da die Vermischung erst im Sprühstrahl stattfindet, ist keine Topfzeit zu beachten. Es wurde das Verhältnis 86 Gew.-% Klebstoffdispersion und 14 Gew.-% CaCl₂-Lösung gewählt.

Die genauen Einstellungen der Spritzpistole sind dem Fachmann prinzipiell bekannt und können ohne ungebührlich hohen Aufwand auf den speziellen Fall zugeschnitten und durch einfache Vorversuche ermittelt werden. Die Mengenverhältnisse und das Auftragsgewicht können durch Rückwiegen der Vorlagebehälter sowie der Substrate ermittelt werden.

Folgende Einstellungen kamen zum Einsatz:
a.) Klebstoffkomponente: Förderdruck 1,3 bar
b.) Koagulationskomponente: Förderdruck 0,4 bar
c.) Zerstäuberluftdruck: 2,8 bar
d.) Bohrung (Düse) f. Komponente Klebstoff: 1,0 mm
e.) Bohrung (Düse) f. Komponente Koagulationsmittel: 0,4 mm
f.) Auftragsgewichte: 100 g/m² (nass)

Die Anfangsfestigkeit wurde ebenfalls direkt nach der Applikation der Klebstoffformulierung anhand der oben beschriebenen Prüfkörper der Firma stn/schaumstoff-technik-Nümberg GmbH Typ ST 5540 ermittelt. Die Anfangsfestigkeit wurde als 2 (gut) ermittelt.

## Patentansprüche

1. Wässrige Klebstoffformulierung, enthaltend eine Mischung aus
(A) mindestens einem teilkristallinen oder kristallinen Polyurethan mit einer Schmelztemperatur von 35 bis 80 °C und einer Schmelzenthalpie von ≥ 35 J/g als Komponente A,
(B) mindestens einem Weichmacher als Komponente B,
(C) mindestens einem Salz als Komponente C, und
(D) gegebenenfalls mindestens einem weiteren Polymer als Komponente D,
**dadurch gekennzeichnet, dass**
die Mischung
(A) 30 bis 94,9 Gew.-% der Komponente A,
(B) 5 bis 45 Gew.-% der Komponente B,
(C) 0,001 bis 3 Gew.-% der Komponente C und
(D) gegebenenfalls 0 bis 30 Gew.-% der Komponente D enthält,
jeweils bezogen auf die Summe der Mengen der in der in der Mischung vorliegenden Komponenten, A, B, C und ggf. D.

2. Klebstoffformulierung nach Anspruch 1, **dadurch gekennzeichnet, dass** das mindestens eine teilkristalline oder kristalline Polyurethan aufgebaut ist aus
(Ai) mindestens einem kristallinen oder teilkristallinen difunktionellen Polyesterpolyol mit einem zahlenmittleren Molekulargewicht von wenigstens 400 g/mol und einer Schmelztemperatur von wenigstens 35 °C und einer Schmelzwärme von wenigstens 35 J/g,
(Aii) optional mindestens einer difunktionellen Polyolkomponente mit einem zahlenmittleren Molekulargewicht von 62 bis 399 g/mol,
(Aiii) mindestens einer Isocyanatkomponente,
(Aiv) mindestens einer gegenüber Isocyanat reaktiven Komponente, die mindestens eine ionische oder potentiell ionische Gruppe trägt, und
(Av) optional weiteren gegenüber Isocyanat reaktiven Komponenten.

3. Klebstoffformulierung nach Anspruch 1 oder 2, **dadurch gekennzeichnet, dass** das mindestens eine Weichmacher ausgewählt ist aus der Gruppe bestehend aus Di(phenoxyethyl)formal, schwerflüchtigen Estern auf Basis von aromatischen Carbonsäuren, aliphatischen Carbonsäuren, Cyclohexandicarbonsäuren, Fettsäuren, Phosphorsäureestern, Sulfonsäureestern oder Alkylsulfonsäureester, epoxidierten Pflanzenölen und Mischungen davon.

4. Klebstoffformulierung nach einem der vorstehenden Ansprüche, **dadurch gekennzeichnet, dass** das mindestens eine Salz ausgewählt ist aus der Gruppe bestehend aus Lithiumsalzen, Ammoniumsalzen, Natriumsalzen und/oder Kaliumsalzen, deren Anion Chlorid, Bromid, Iodid und/oder Sulfat ist.

5. Klebstoffformulierung nach einem der vorstehenden Ansprüche, **dadurch gekennzeichnet, dass** der nichtflüchtige Anteil höher als 45 Gew.-%, bevorzugt 50 bis 85 Gew.-%, besonders bevorzugt 50 bis 75 Gew.-%, insbesondere bevorzugt 53 bis 70 Gew.-%, ist.

6. Klebstoffformulierung nach einem der vorstehenden Ansprüche, **dadurch gekennzeichnet, dass** mindestens eine weitere Polymer vorliegt und dieses ausgewählt ist aus der Gruppe bestehend aus PU (Polyurethan), PVDC (Polyvinylidenchlorid), PVC (Polyvinylchlorid), PVA (Polyvinylacetat), EVA (Polyethylenvinylacetat), PAC (Polyacrylat), CR (Polychloropren), PS (Polystyrol), SBR (Polystyrolbutadien), NBR (Polyacrylnitril) und Mischungen davon.

7. Verfahren zur Herstellung der wässrigen Klebstoffformulierung nach einem der Ansprüche 1 bis 6 durch Mischen der einzelnen Komponenten.

8. Verfahren zur Herstellung einer Klebung von Substraten, **dadurch gekennzeichnet, dass** eine Klebstoffformulierung nach einem der Ansprüche 1 bis 6 auf mindestens ein Substrat appliziert wird und anschließend ein Kleben erfolgt.

9. Verfahren nach Anspruch 8, **dadurch gekennzeichnet, dass** es als 1K(omponenten)-Verfahren oder als 2K(omponenten)-Verfahren, bevorzugt als 1K(omponenten)-Verfahren, erfolgt.

10. Verfahren zur Herstellung eines Verbundmaterials durch Klebender einzelnen Fügeteile des Verbundmaterials, wobei die wässrige Klebstoffformulierung nach einem der Ansprüche 1 bis 6 eingesetzt wird.

11. Verwendung der wässrigen Klebstoffformulierung nach einem der Ansprüche 1 bis 6 zum Kleben von Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen, jeweils miteinander und/oder an porige Substrate, bevorzugt mit einer Dichte von weniger als 1 kg/Liter, insbesondere zum Kleben von Schaumstoffen in der Matratzen-, Möbel- und/oder Polsterherstellung.

12. Verwendung nach Anspruch 11, **dadurch gekennzeichnet, dass** sie in einem 1K(omponenten)-Verfahren oder in einem 2K(omponenten)-Verfahren, bevorzugt in einem 1K(omponenten)-Verfahren, erfolgt.

## Claims

1. Aqueous adhesive formulation comprising a mixture of
(A) at least one semicrystalline or crystalline polyurethane having a melting temperature of 35 to 80°C and an enthalpy of fusion of ≥ 35 J/g as component A,
(B) at least one plasticizer as component B,
(C) at least one salt as component C, and
(D) optionally at least one further polymer as component D,
**characterized in that**
the mixture contains
(A) 30% to 94.9% by weight of component A,
(B) 5% to 45% by weight of component B,
(C) 0.001% to 3% by weight of component C, and
(D) optionally 0% to 30% by weight of component D,
in each case based on the sum total of the amounts of components A, B, C, and optionally D present in the mixture.

2. Adhesive formulation according to Claim 1, **characterized in that** the at least one semicrystalline or crystalline polyurethane is formed from
(Ai) at least one crystalline or semicrystalline difunctional polyester polyol having a number-average molecular weight of at least 400 g/mol and a melting temperature of at least 35°C and a heat of fusion of at least 35 J/g,
(Aii)optionally at least one difunctional polyol component having a number-average molecular weight of 62 to 399 g/mol,
(Aiii) at least one isocyanate component,
(Aiv)at least one isocyanate-reactive component bearing at least one ionic or potentially ionic group, and
(Av) optionally further isocyanate-reactive components.

3. Adhesive formulation according to Claim 1 or 2, **characterized in that** the at least one plasticizer is selected from the group consisting of di(phenoxyethyl) formal, low-volatility esters based on aromatic carboxylic acids, aliphatic carboxylic acids, cyclohexanedicarboxylic acids, fatty acids, phosphoric esters, sulfonic esters or alkylsulfonic esters, epoxidized vegetable oils, and mixtures thereof.

4. Adhesive formulation according to any of the preceding claims, **characterized in that** the at least one salt is selected from the group consisting of lithium salts, ammonium salts, sodium salts and/or potassium salts, the anion of which is chloride, bromide, iodide and/or sulfate.

5. Adhesive formulation according to any of the preceding claims, **characterized in that** the nonvolatile fraction is higher than 45% by weight, preferably 50% to 85% by weight, more preferably 50% to 75% by weight, particularly preferably 53% to 70% by weight.

6. Adhesive formulation according to any of the preceding claims, **characterized in that** at least one further polymer is present and that this is selected from the group consisting of PU (polyurethane), PVDC (polyvinylidene chloride), PVC (polyvinyl chloride), PVA (polyvinyl acetate), EVA (polyethylene vinyl acetate), PAC (polyacrylate), CR (polychloroprene), PS (polystyrene), SBR (polystyrene-butadiene), NBR (polyacrylonitrile), and mixtures thereof.

7. Method for producing the aqueous adhesive formulation according to any of Claims 1 to 6 by mixing the individual components.

8. Method for producing an adhesive bond between substrates, **characterized in that** an adhesive formulation according to any of Claims 1 to 6 is applied to at least one substrate, after which bonding takes place.

9. Method according to Claim 8, **characterized in that** it is executed as a 1K (1-component) method or as a 2K (2-component) method, preferably as a 1K (1-component) method.

10. Method for producing a composite material by bonding individual joining parts of the composite material using the aqueous adhesive formulation according to any of Claims 1 to 6.

11. Use of the aqueous adhesive formulation according to any of Claims 1 to 6 for the bonding of wood, paper, thermoplastics, elastomeric plastics, thermoplastic-elastomeric plastics, vulcanizates, textile fabrics, knitted fabrics, braids, leather, metals, ceramics, asbestos cement, stoneware, concrete, foams, in each case with one another and/or on porous substrates, preferably having a density of less than 1 kg/liter, especially for the bonding of foams in the manufacture of mattresses, furniture and/or upholstery.

12. Use according to Claim 11, **characterized in that** it takes place in a 1K (1-component) method or in a 2K (2-component) method, preferably in a 1K (1-component) method.

## Revendications

1. Formulation adhésive aqueuse contenant un mélange de
(A) comme composant A, au moins un polyuréthane partiellement cristallin ou cristallin ayant une température de fusion de 35 à 80 °C et une enthalpie de fusion ≥ 35 J/g,
(B) comme composant B au moins un plastifiant,
(C) comme composant C au moins un sel, et
(D) comme composant D éventuellement au moins un autre polymère,
**caractérisée en ce que** le mélange contient
(A) 30 à 94,9 % en poids du composant A,
(B) 5 à 45 % en poids du composant B,
(C) 0,001 à 3 % en poids du composant C et
(D) éventuellement 0 à 30 % en poids du composant D,
dans chaque cas par rapport à la somme des quantités des composants A, B, C et éventuellement D présents dans le mélange.

2. Formulation adhésive selon la revendication 1, **caractérisée en ce que** l'au moins un polyuréthane partiellement cristallin ou cristallin est constitué de
(Ai) au moins un polyesterpolyol difonctionnel cristallin ou partiellement cristallin ayant une masse moléculaire moyenne en nombre d'au moins 400 g/mol et une température de fusion d'au moins 35 °C et une chaleur de fusion d'au moins 35 J/g,
(Aii) en option au moins un composant polyol difonctionnel ayant une masse moléculaire moyenne en nombre de 62 à 399 g/mol,
(Aiii) au moins un composant isocyanate,
(Aiv) au moins un composant réactif vis-à-vis des isocyanates, qui porte au moins un groupe ionique ou potentiellement ionique, et
(Av) en option d'autres composants réactifs vis-à-vis des isocyanates.

3. Formulation adhésive selon la revendication 1 ou 2, **caractérisée en ce que** l'au moins un plastifiant est choisi dans le groupe consistant en le di(phénoxyéthyl)formal, les esters difficilement volatils à base d'acides carboxyliques aromatiques, d'acides carboxyliques aliphatiques, d'acides cyclohexanedicarboxyliques, d'acides gras, les esters d'acides phosphoriques, les esters d'acides sulfoniques ou les esters d'acides alkylsulfoniques, les huiles végétales époxydées et les mélanges de ceux-ci.

4. Formulation adhésive selon l'une des revendications précédentes, **caractérisée en ce que** l'au moins un sel est choisi dans le groupe consistant en les sels de lithium, les sels d'ammonium, les sels de sodium et/ou les sels de potassium, dont l'anion est l'anion chlorure, bromure, iodure et/ou sulfate.

5. Formulation adhésive selon l'une des revendications précédentes, **caractérisée en ce que** la proportion non volatile est supérieure à 45 % en poids, de préférence de 50 à 85 % en poids, d'une manière particulièrement préférée de 50 à 75 % en poids, tout spécialement de 53 à 70 % en poids.

6. Formulation adhésive selon l'une des revendications précédentes, **caractérisée en ce qu'**elle contient au moins un autre polymère, ce dernier étant choisi dans le groupe consistant en : PU (polyuréthane), PVDC (poly(chlorure de vinylidène)), PVC (poly(chlorure de vinyle)), PVA (poly(acétate de vinyle)), EVA (poly(éthylène-acétate de vinyle)), PAC (polyacrylate), CR (polychloroprène), PS (polystyrène), SBR (polystyrène-butadiène), NBR (polyacrylonitrile) et les mélanges de ceux-ci.

7. Procédé de fabrication de la formulation adhésive aqueuse selon l'une des revendications 1 à 6 par mélange des composants individuels.

8. Procédé de fabrication d'un assemblage collé de substrats, **caractérisé en ce qu'**on applique sur au moins un substrat une formulation adhésive selon l'une des revendications 1 à 6, puis on procède à un collage.

9. Procédé selon la revendication 8, **caractérisé en ce qu'**il est réalisé comme un procédé 1K (mono-composant) ou un procédé 2K (bicomposant), de préférence comme un procédé 1K (mono-composant).

10. Procédé de fabrication d'un matériau composite par collage des éléments d'assemblage individuels du matériau composite, dans lequel on utilise la formulation adhésive aqueuse selon l'une des revendications 1 à 6.

11. Utilisation de la formulation adhésive aqueuse selon l'une des revendications 1 à 6 pour le collage de bois, de papier, de plastiques thermoplastiques, de plastiques élastomères, de plastiques thermoplastique-élastomères, de vulcanisats, de tissus textiles, de tricots, d'articles maille, de cuir, de métaux, de céramiques, d'amiante-ciment, de grès-cérame, de béton, de mousses, dans chaque cas les uns aux autres et/ou à des substrats poreux, de préférence ayant une masse volumique inférieure à 1 kg/litre, en particulier pour le collage de mousses dans la fabrication de matelas, de meubles et/ou de rembourrages.

12. Utilisation selon la revendication 11, **caractérisée en ce qu'**elle a lieu dans un procédé 1K (mono-composant) ou dans un procédé 2K (bicomposant), de préférence dans un procédé 1K (mono-composant).
